Europäisches Patentamt

European Patent Office

Office européen des brevets

(11) Publication number: **0 200 566**
**B1**

(12) **EUROPEAN PATENT SPECIFICATION**

(45) Date of publication of patent specification: **14.11.90**

(21) Application number: **86303375.9**

(22) Date of filing: **02.05.86**

(51) Int. Cl.⁵: **B 62 B 3/02,** B 62 B 3/10

(54) Plastic wheeled cart chassis having a reinforced structure.

(30) Priority: **03.05.85 US 729936**

(43) Date of publication of application:
**05.11.86 Bulletin 86/45**

(45) Publication of the grant of the patent:
**14.11.90 Bulletin 90/46**

(84) Designated Contracting States:
**AT BE CH DE FR GB IT LI NL SE**

(56) References cited:
**EP-A-0 161 890**
**GB-A-2 043 552**

(73) Proprietor: **REHRIG INTERNATIONAL, INC.**
**5001 N. Hampton Street**
**Los Angeles California 90058 (US)**

(72) Inventor: **Houston, Rehrig**
**505 S. Orange Grove Apt. No. 11**
**Pasadena California, 91105 (US)**

(74) Representative: **Frost, Dennis Thomas**
**WITHERS & ROGERS 4 Dyer's Buildings Holborn**
**London, EC1N 2JT (GB)**

Courier Press, Leamington Spa, England.

## Description

Background of the invention

The present invention relates generally to the field of wheeled carts such as to those used as grocery shopping carts in supermarkets and the like, and more particularly, is directed to a novel plastic wheeled cart chassis having a reinforced structure for use with a bottom-supported basket.

Ideally, carts of this type, and particularly those used in supermarkets and grocery stores, should have the following characteristics. First, they should be able to withstand a great deal of abuse, particularly to the basket portion as carts are continuously impacted with one another and with stationary objects. Second, the carts should be easy to push and to maneuver. The condition of the cart wheels has a great effect on this characteristic, but so does the weight of the cart. Third, the carts should be of such design and such surface finish as not to have a propensity to collect dirt and contaminants. Fourth, the carts should be able to withstand cleaning by strong detergents or steam. Fifth, the carts should have sides of openwork construction because customers often wish to be able to observe the contents of the carts from any angle. Sixth, the carts should be attractive and should maintain their attractiveness over a long period of time.

For the most part, the carts present in the prior art comprise a tubular metal frame or chassis to which is attached a basket of open wire-work construction. The wires are in various crossing patterns, and are usually welded together at the crossing points. Heavier wire reinforcment is used where necessary. Conventionally, the cart frame and the basket are integral with one another. That is, the basket wires and the frame components are welded together at approriate points or the wires are interlocked with the frame components. To promote cleanliness and attractiveness, the entire cart is chrome-plated. Sometimes plastic or rubber bumpers are installed at strategic points, such as corners.

The prior art carts do not satisfy all of the requirments set forth above. Many of the deficiencies associated with such carts have to do with the basket portion. The wires in the basket are welded at the crossing points, and the basket is then chrome-plated, the latter to provide a smooth, cleanable, attractive surface. The welding process for such an item is intricate, as is the plating process. It is therefore not uncommon to have welds and plating of marginal quality so that, upon hard impact, or upon a series of impacts over a period of time, wire welds and the plating are broken. The plating is also subject to being removed by wear and by scraping against other objects. This allows the base metal to rust. Also, if the basket is used in an environment where corrosion of metals is a problem, such as in grocery stores, the base metal exposed at the broken welds will eventually corrode. The cart, and particularly the basket, then becomes unsightly and unattractive. At those same exposed points, food particles can become entrapped in small cracks and crevices, even if the basket is periodically cleaned, resulting in an unsanitary condition. In addition, articles placed in the basket can become pinched or snared by the unsecured wires and plating, causing inconvenience for the customer and inflicting damage to the goods. Impacts also frequently cause the backet to be deformed inwardly, giving rise to all of the above problems.

Repair of cart baskets is a problem in itself, because it is difficult to bend the wires back into shape, and it is difficult and expensive to reweld and replate them. The cart frame and the basket are often integral with one another in prior art carts, and therefore they cannot easily be taken apart to allow repair or replacement of components. To replace the basket, welds must be broken, then replaced. Or complicated bending and interlocking of wires is necessary during disassembly and assembly. Usually, the cart is simply not repaired. When it becomes too unsightly or too unsanitary to be used, it is discarded. The loss of the entire cart for the sake of the basket is certainly uneconomical.

The above described deficiencies associated with baskets of wire work construction were addressed in Applicant's U.S. Patent No. 3,999,774 and 4,273,346. These Patents disclose a plastic basket for use on a metal frame and have resulted in carts that are far superior to those previously known in the art. While such carts represent a significant advancement in the art, they are not the ideal cart because of the use of a metal frame or chassis.

A metal frame suffers from many of the same problems and concerns described above with respect to baskets of wire construction. Thus, they are susceptible to broken welds and plating, have a propensity to collect dirt and contaminants and cannot be easily separated from the basket to make repairs or perform routine maintenance such as cleaning. Thus, as with baskets of wire construction, metal frames or chassis deteriorate rather quickly and must be discarded.

Carts having metal frames are also quite heavy, making them difficult to push and to maneuver, especially if they have some malfunction of the wheels.

Summary of the invention

It is the overall object of the present invention to provide a new plastic chassis having a reinforced structure for use with a basket which overcomes the disadvantages of prior art frames and chassis.

A specific object of the present invention is to provide a new plastic chassis which is not easily damaged by impact.

Another specific object of the present invention is to provide a new plastic chassis which is easy to clean.

Another specific object of the present invention is to provide a new plastic chassis which can be quickly and releasably mounted to a basket.

A further specific object of the present invention is to provide a new plastic chassis which is lighter in weight than chassis known in the prior art.

A still further specific object of the present invention is to provide a new plastic chassis which does not prevent basket nesting when a basket is mounted on the chassis.

Another specific object of the present invention is to provide a new plastic chassis which is less noisy than chassis known in the prior art.

Another specific object of the present invention is to provide a new plastic chassis which is more attractive than prior art chassis, and which maintains this attractiveness over a long period of time.

Another specific object of the present invention is to provide a new plastic chassis which can be quickly and releasably coupled to a basket.

The chassis in accordance with the present invention is made of plastic, such as polyethylene, which is strong, light-weight, has a smooth finish, and can deform somewhat to absorb impact and then return to its original shape. The chassis is molded as an integral unit. Thus there are no seams to break, or cracks and crevices to collect dirt. The plastic does not rust or corrode under the influence of food acids and the like. The use of a plastic chassis has been found to substantially reduce the weight of an average cart. Rigidity is provided to the chassis by the use of suitable integral strengthening ribs, beams and struts. In addition, a number of metal reinforcing plates and rails are provided which further provide strength and rigidity to the chassis. The arrangement of the ribs, beams, struts and metal reinforcing plates and rails enable the chassis of the present invention to carry a very large load without buckling under stress.

One of the key features of this invention is the fact that the chassis can be replaced, if necessary, and further, that it can be replaced quite easily. The top portion of the chassis includes coupling means for quickly and releasably coupling the chassis to a basket having corresponding coupling means. The coupling means includes male locking elements which cooperate with corresponding female locking elements on the basket. Therefore, the basket may be quickly coupled to the chassis. Thus, damage to the basket does not require that the chassis be discarded and damage to the chassis does not require that the basket be discarded. A damaged basket may be quickly removed and a new basket installed on the cart chassis and a damaged chassis may likewise be removed and a new one installed.

Another advantage is that the plastic chassis can be made in a variety of bright colors. This makes the cart more attractive. It also makes the cart more visible, which reduces accidents both inside the grocery store and outside on the parking lot.

The noise produced by movement of carts which have the chassis of the invention or, by impacting it with other carts or other objects, is considerably less than with carts having chassis known in the prior art.

Brief description of the drawings

Fig. 1 is a side elevational view of the plastic chassis in accordance with the present invention.

Fig. 2 is a top plan view of the chassis.

Fig. 3 is a front elevational view of the chassis.

Fig. 4 is a rear elevational view of the chassis.

Figs. 5—10 are sectional views taken along corresponding section lines of Fig. 1.

Figs. 11—15 are sectional views taken along corresponding section lines of Fig. 2.

Fig. 16 is a sectional view taken along lines 16—16 of Fig. 2.

Fig. 17 is a perspective view showing the assembly of the reinforcing plate for the wheel mounting member and the reinforcing castor rail for the chassis side beams.

Brief description of the preferred embodiment

The chassis in accordance with the present invention is comprised of a number of interrelated elements, each of which are shown in the various Figures. The chassis is advantageously manufactured of a molded plastic material such as polyethylene. The properties of polyethylene are ideally suited to this application, for polyethylene is relatively strong, but is flexible enough to absorb some deformation, such as caused by impact, without breaking. However, other materials having similar properties can also be used.

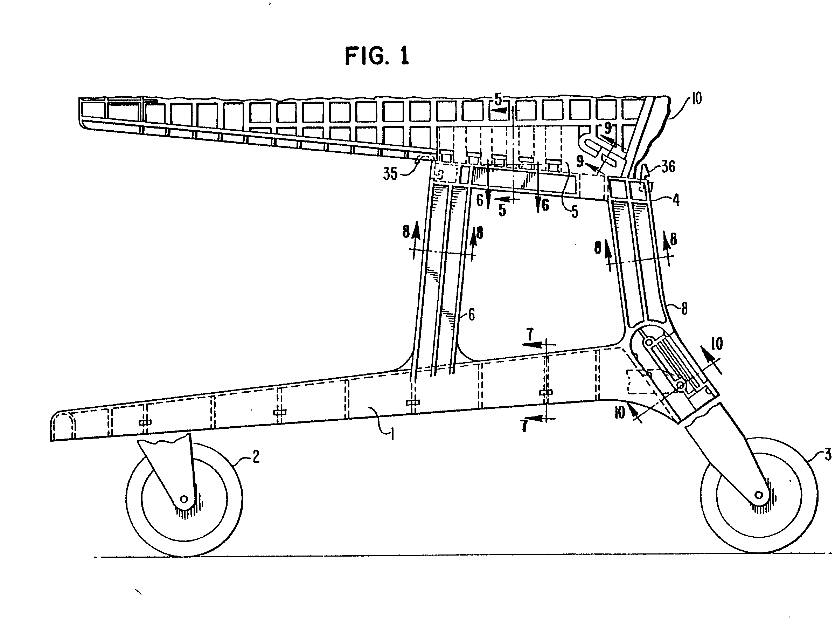

With reference to Figure 1, the chassis in accordance with the present invention comprises a longitudinally extending base 1 with front wheel assemblies 2 and rear wheel assemblies 3. An upstanding molded basket support 4 is supported by base 1. Basket support 4 has an upwardly facing mounting portion 5 which is adapted to mate with a corresponding basket mounting portion of basket 10 (partially shown in Figure 1); such as the mounting portion of the basket disclosed in Applicant's U.S. Patent Application Serial No. 607,129 filed May 4, 1984. All of these elements are integrally molded as a single unit.

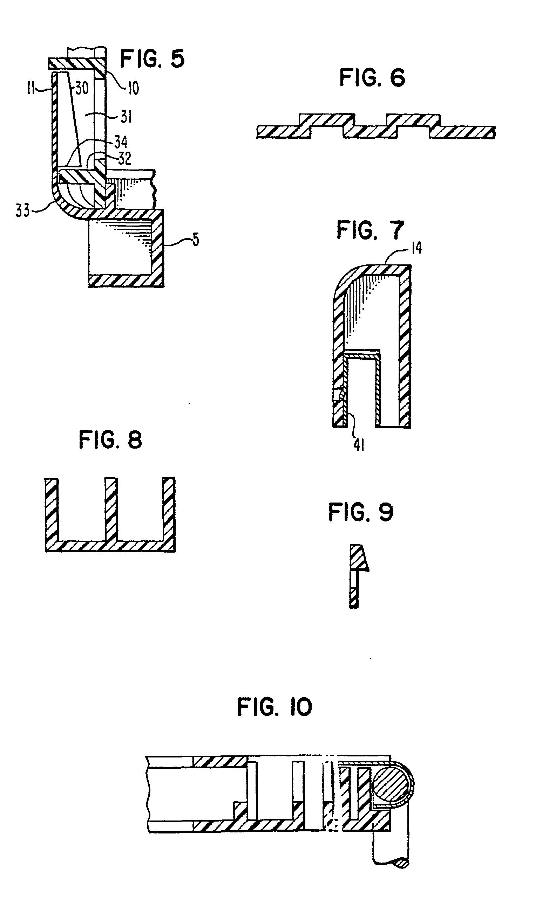

Mounting portion 5 includes locking feature 11 (better shown in Figure 5) for quickly and releasably coupling basket 10 to mounting portion 5. Locking feature 11 includes tang 30 which is received in window 31 of basket 10 and locks over shoulder 32 of basket 10. Mounting portion 5 includes a plurality of locking features 11 to provide secure coupling of basket 10 to the chassis of the invention. As can be seen in Figure 5, tang 30 flexes about curvature 33 around shoulder 32 as tang 30 is introduced into window 31. When edge 34 of tang 30 passes shoulder 32, the natural spring bias of the tang causes it to snap into the positoin shown in Figure 5, thereby locking basket 10 securely to mounting portion 5.

As shown in Figure 1, locking feature 11 extends along mounting portion 5 so that a plurality of tangs 30 are provided to positively lock basket 10 to mounting portion 5. This is an important consideration when one considers that a fully loaded grocery shopping basket is quite heavy. Thus, means must be provided to securely attach the basket to the cart chassis. This means is provided by locking features 11 with their plurality of tangs 30.

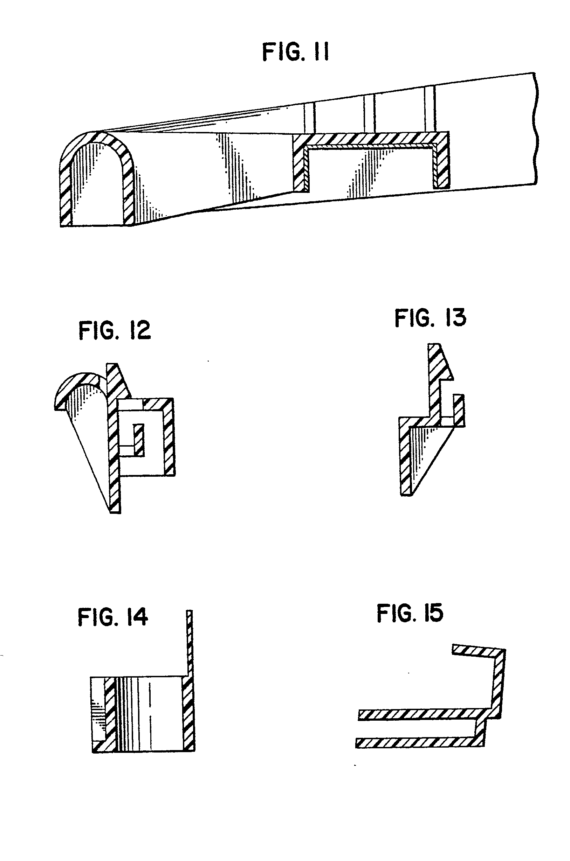

As shown in Figures 1, 2, 3, 4, 12 and 13, auxiliary locking features 35 and 36 are provided at the front and rear of mounting portion 5 to further ensure that basket 10 is securely locked to the chassis. The auxiliary locking features comprise a tang which snaps into position over a locking shoulder similar in operation to locking feature 11 shown in Figure 5.

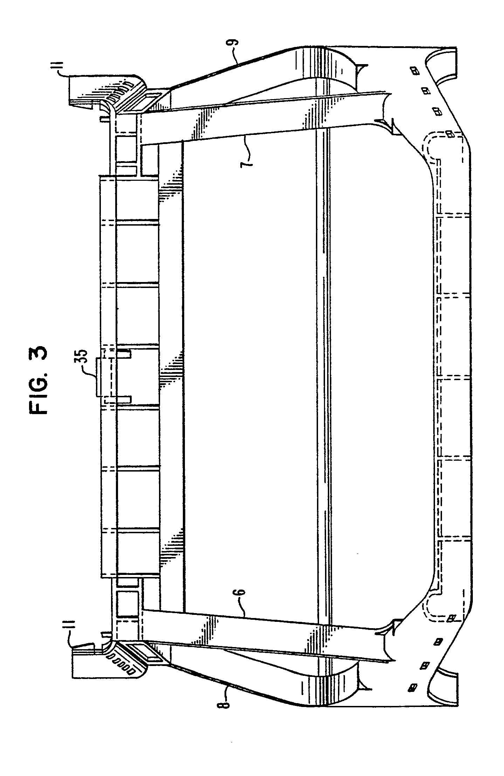

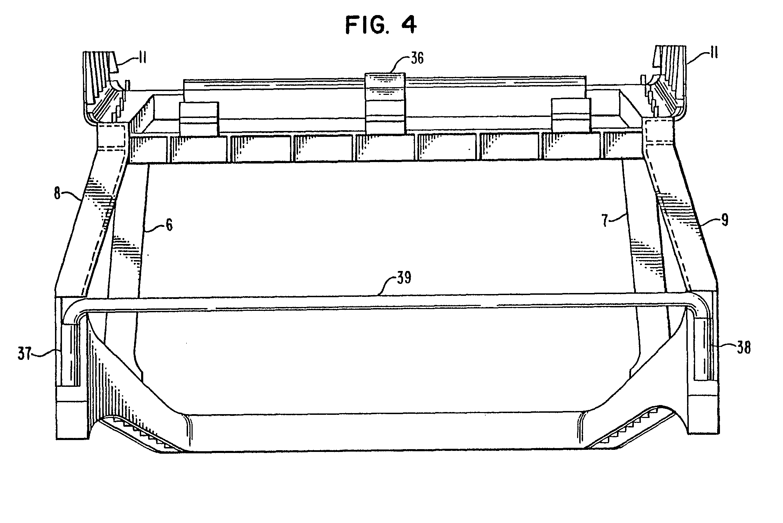

With reference again to Figure 1, basket support 4 includes front side struts 6 and 7 and rear side struts 8 and 9 (see also Figures 3 and 4). The front and rear side struts are ribbed for high strength as shown in Figure 8.

As shown in Figures 3 and 4, rear side struts 8 and 9 are provided with brackets 37 and 38 which receive spreader wire 39. Wire 39 prevents the rear side struts from bowing in or out when a heavy load is placed on the chassis, such as a fully loaded grocery basket. Brackets 37 and 38 may be integrally formed with side struts 8 and 9 or may be separate components attached to the side struts by various fastening means and methods known in the art. As shown in Figure 10 (a cross-section taken along lines 10—10 of Figure 1), brackets 37 and 38 are pieces of fabricated sheet metal which are received in slots integrally molded into side struts 8 and 9. As shown in Figures 3 and 4, spreader wire 39 is a metal rod but may be any material which is rigid and strong.

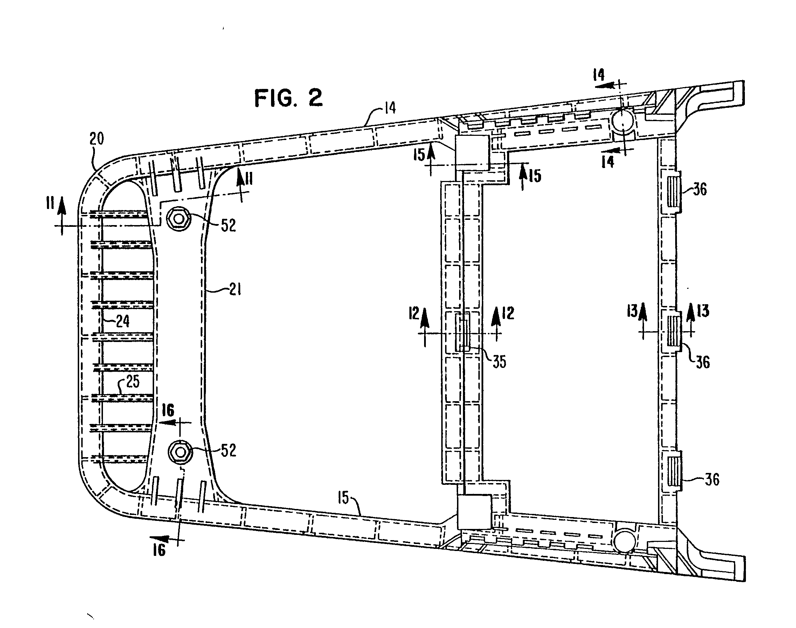

As shown in Fig. 2, base support 1, comprises parallel spaced beams 14 and 15. Wheel assemblies 2 and 3 are mounted adjacent the rear and front ends of side beams 14 and 15. Rear wheel assemblies 3 are mounted so that the center of rotation of each wheel is aligned with the axis of a beam 14 or 15.

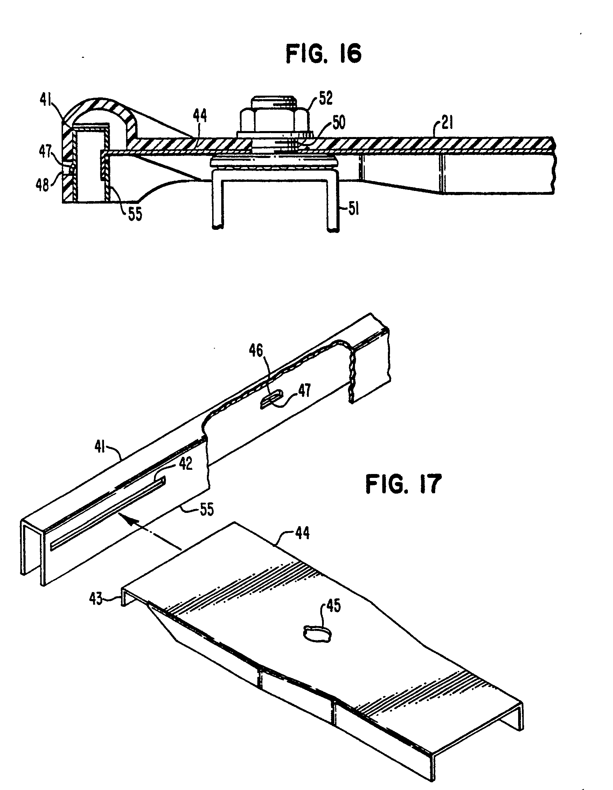

As shown in Figure 7, which is a cross-sectional view taken along lines 7—7 of Figure 1, beams 14 and 15 are integrally molded to receive strengthening rail 41 shown in Figures 16 and 17. As shown in these Figures, rail 41 is U-shaped in construction to fit the inside contour of beams 14 and 15. The rail 41 used with beam 14 is a mirror image of the rail 41 used with beam 15. Rail 41 is also provided with a slot 42 in its inside wall 55 which receives edge 43 of caster plate 44 as shown in Figure 16. The interlocking of each end of caster plate 44 with its respective rail 41 prevents beams 14 and 15 from bowing in or out under the load. Rail 41 also includes locking tab 47 which is blanked from window 46. Tab 47 is received in window 48 formed in beams 14 and 15 to hold rail 41 in place. A plurality of tabs 47 and corresponding windows 48 may be formed in rail 41 and beams 14 and 15, respectively. Rail 41 may be fabricated from 18 GA sheet metal blanked and formed accordingly.

Beams 14 and 15 are integrally molded with traverse front assembly 20. Assembly 20 include front wheel mounting member 21 which is integrally molded to receive strengthening caster plate 44 shown in Figures 16 and 17. Projecting from wheel mounting member 1 is nose portion 24. Nose 24 includes a plurality of longitudinal struts 25 to strengthen the nose section of base 1.

It has been found that the present invention, with its various ribs, beams, struts and metal reinforcing plates and rails, provides a chassis that is far superior to such chassis known in the prior art. The chassis of the invention is light weight, yet strong and durable and easy to maintain. Front wheel mounting member 21 and caster plate 44 includes holes 50 and 45, respectively, which receive caster wheel assembly 51. Caster wheel assembly 51 is held in place by nut 52 and may be selected from a number of caster wheel assemblies known in the prior art.

Obviously, many modifications and variations of the above described preferred embodiment will become apparent to those skilled in the art from a reading of this disclosure. It should be realized that the invention is not limited to the particular apparatus disclosed, but its scope is intended to be governed only by the scope of the appended claims.

## Claims

1. A wheeled plastics cart frame for use with a bottom-supported basket (10) having a downwardly-facing basket mounting portion, said cart frame comprising a moulded longitudinally extending base (1) having spaced side beams (14, 15), an upstanding moulded plastics basket support (4) connected to said base and having an upwardly-facing frame mounting portion (5) adapted to mate with said basket mounting portion, coupling means (11) for coupling said basket to said frame mounting portion, longitudinal reinforcing means (41) coupled to said side beams for reinforcing said side beams, a transverse front assembly (20) integrally moulded with said side beams at the front ends thereof, transverse reinforcing means (44) coupled to said front assembly for reinforcing said front assembly, locking means (42, 43) for securing said longitudinal reinforcing means to said transverse reinforcing means and front and rear wheels (2, 3) supporting said base, said front wheel (2) being mounted on said front assembly.

2. The cart frame of claim 1, wherein said locking means comprises engaging means (42) on said longitudinal reinforcing means for receiving a respective end portion (43) of said transverse reinforcing means, said end portion received by said engaging means securing said transverse reinforcing means to said longitudinal reinforcing means.

3. The cart frame of claim 2, wherein said engaging means comprises a slot (42) and said end portion (43) is formed with a bent shape to thereby be retained within said slot.

4. The cart frame of any preceding claim, further comprising locking means for securing said longitudinal reinforcing means (41) to each said side beam (14, 15), said locking means comprising a projection (47) on said longitudinal reinforcing means and a recess (48) in each said side beam for receiving said projection.

5. A wheeled plastics cart frame for use with a bottom-supported basket (10) having a downwardly-facing basket portion, said cart frame comprising a moulded longitudinally extending base (1) having spaced side beams (14, 15), longitudinal reinforcing means (41) coupled to said side beams for reinforcing said side beams, front and rear wheels (2, 3) supporting said base, an upstanding moulded plastics basket support (4) connected to said base and having an upwardly-facing frame mounting portion (5) adapted to mate with said basket mounting portion, said basket support comprising upstanding front and rear side struts (6, 7, 8, 9) on each side thereof, said rear side struts (8, 9) being connected respectively to said side beams to form a wheel mounting portion for said rear wheels, said rear wheels (3) being attached to said mounting portion through said longitudinal reinforcing means such that said longitudinal reinforcing means is securely connected to said wheel mounting portion and coupling means (11) for coupling said basket to said frame mounting portion.

6. The cart frame of claim 5, wherein said basket support includes stabilizing members (37, 38) positioned between each of said rear side struts and stabilizing said rear side struts in a substantially upright position and retention means (39) for retaining said stabilizing members.

7. The cart frame of claim 6, wherein said stabilizing members are integrally formed with said rear side struts.

8. The cart frame of claim 6 or 7, wherein said retention means comprises a rigid rod (39).

**Patentansprüche**

1. Mit -Rädern versehener Karrenrahmen aus Kunststoff zur Verwendung mit einem bodenseitig abgestützten Korb (10), der einen nach unten weisenden Korbhalteabschnitt hat, wobei der Karrenrahmen eine sich in Längsrichtung erstreckende durch Gießformen gefertigte Basis (1) mit im Abstand angeordneten Seitenträgern (14, 15), eine nach oben ragende durch Gießformen gefertigte Abstützung (4) aus Kunststoff für den Korb, die mit der Basis verbunden ist und einen nach oben weisenden Rahmenhalteabschnitt (5) für ein Zusammenfügen mit dem Korbhalteabschnitt hat, Kupplungseinrichtungen (11) zum Verbinden des Korbs mit dem Rahmenhalteabschnitt, Längsverstärkungseinrichtungen (41), die mit den Seitenträgern zum Verstärken dieser Träger gekoppelt sind, eine quer verlaufende Frontanordnung (20), die in einem Stück mit den Seitenträgern an deren vorderen Enden ausgeformt ist, quer verlaufende Verstärkungseinrichtungen (44), die mit der Frontanordnung zum Verstärken der Frontanordnung gekoppelt sind, Arretiereinrichtungen (42, 43) zum Befestigen der Längsverstärkungseinrichtungen an den quer verlaufenden Verstärkungseinrichtungen und die Basis abstützende Vorder- und Hinterräder (2, 3) aufweist, von denen das Vorderrad (2) an der Frontanordnung angebracht ist.

2. Karrenrahmen nach Anspruch 1, bei welchem die Arretiereinrichtungen Eingriffseinrichtungen (42) an den Längsverstärkungseinrichtungen für die Aufnahme eines jeweiligen Endabschnitts (43) der quer verlaufenden Verstärkungseinrichtungen aufweisen, wobei der von den Eingriffseinrichtungen aufgenommene Endabschnitt die quer verlaufenden Verstärkungesinrichtungen an den Längsverstärkungseinrichtungen festlegt.

3. Karrenrahmen nach Anspruch 2, bei welchem die Eingriffseinrichtungen einen Schlitz (42) aufweisen und der Endabschnitt (43) mit einer gebogenen Form ausgebildet ist, um dadurch in dem Schlitz gehalten zu werden.

4. Karrenrahmen nach einem vorhergehenden Anspruch, welcher weiterhin Arretiereinrichtungen zum Festlegen der Längsverstärkungseinrichtungen (41) an jedem Seitenträger (14, 15) aufweist, wobei die Arretiereinrichtungen einen Vorsprung (47) an den Längsverstärkungseinrichtungen und eine Ausnehmung (48) in jedem Seitenträger für die Aufnahme des Vorsprungs aufweisen.

5. Mit Rädern versehener Karrenrahmen aus Kunststoff zur Verwendung mit einem bodenseitig abgestützten Korb (10), der einen nach unten weisenden Korbhalteabschnitt hat, wobei der Karrenrahmen eine sich in Längsrichtung erstreckende durch Gießformen gefertigte Basis (1) mit im Abstand angeordneten Seitenträgern (14, 15), Längsverstärkungseinrichtungen (41), die mit den Seitenträgern zur Verstärkung der Seitenträger gekoppelt sind, die Basis abstützende Vorder- und Hinterräder (2, 3), eine nach oben ragende durch Gießformen gefertigte Abstützung (4) aus Kunststoff für den Korb, die mit der Basis verbunden ist und einen nach oben weisenden Rahmenhalteabschnitt (5) für ein Zusammenfügen mit dem Korbhalteabschnitt hat, die Abstützung für den Korb nach oben ragende vordere und hintere Seitenstreben (6, 7, 8, 9) auf jeder Seite davon hat, die hinteren Seitenstreben (8, 9) jeweils mit den Seitenträgern zur Bildung eines Radhalteabschnitts für die Hinterräder verbunden sind, die Hinterräder (3) an dem Halteabschnitt über die Längsverstärkungseinrichtungen so befestigt sind, daß die Längsverstärkungseinrichtúngen fest mit dem Radhalteabschnitt verbunden sind, und Kupplungseinrichtungen (11) zum Verbinden des Korbs mit dem Rahmenhalteabschnitt aufweist.

6. Karrenrahmen nach Anspruch 5, bei welchem die Abstützung für den Korb Stabilisierungselemente (37, 38), die zwischen jeder der hinteren Seitenstreben angeordnet sind und die hinteren Seitenstreben in einer im wesentlichen aufrechten Position stabilisieren, sowie Halteeinrichtungen (39) zum Halten der Stabilisierungselemente aufweist.

7. Karrenrahmen nach Anspruch 6, bei welchem die Stabilisierungselemente in einem Stück mit den hinteren Seitenstreben ausgebildet sind.

8. Karrenrahmen nach Anspruch 6 oder 7, bei welchem die Halteeinrichtungen eine starre Stange (39) aufweisen.

**Revendications**

1. Châssis de chariot en matière plastique monté sur roues destiné à être utilisé avec un panier (10) supporté par sa base comportant une partie de montage du panier dirigée vers le bas, ledit châssis de chariot comportant une base moulée s'étendant longitudinalement (1) ayant des poutres latérales espacées (14, 15), un support de panier en matière plastique moulée (4) s'étendant vers le haut connecté à ladite base et ayant une partie de montage de châssis dirigée vers le haut (5) susceptible de coopérer avec ladite partie de montage de panier, des moyens de couplage (11) pour coupler ledit panier à ladite partie de montage de châssis, des moyens de renforcement longitudinaux (41) couplés auxdites poutres latérales pour renforcer lesdites poutres latérales, un ensemble frontal transversal (20) moulé solidaire desdites poutres latérales aux extrémités frontales de ces dernières, des moyens de renforcement transversaux (44) couplés audit ensemble frontal pour renforcer ledit ensemble frontal, des moyens de verrouillage (42, 43) pour solidariser lesdits moyens de renforcement longitudinaux auxdits moyens de renforcement transversaux et des roues avant et arrière (2, 3), supportant ladite base, ladite roue avant (2) étant montée sur ledit ensemble frontal.

2. Châssis de chariot selon la revendication 1 dans lequel lesdits moyens de verrouillage comportent des moyens d'engagement (42) sur lesdits moyens de reforcement longitudinaux pour recevoir une partie d'extrémité correspondante (43) desdits moyens de renforcement transversaux, ladite partie d'extrémité étant reçue par lesdits moyens d'engagement pour fixer lesdits moyens de renforcement transversaux auxdits moyens de renforcement longitudinaux.

3. Châssis de chariot selon la revendication 2 dans lequel lesdits moyens d'engagement comportent une fente (42) et ladite partie d'extrémité (43) est formée avec une forme coudée pour être retenue à l'intérieur de ladite fente.

4. Châssis de chariot selon l'une quelconque des revendications précédentes comportant en outre des moyens de verrouillage pour fixer lesdits moyens de renforcement longitudinaux (41) à chacune desdites poutres latérales (14, 15), lesdits moyens de verrouillage comportant une saillie (47) sur lesdits moyens de renforcement longitudinaux et une dépression (48) dans chacune desdites poutres latérales pour recevoir ladite saillie.

5. Châssis de chariot en matière plastique monté sur roues destiné à être utilisé avec un panier supporté par son fond (10) comportant une partie de panier dirigée vers le bas, ledit châssis de chariot comprenant une base s'étendant longitudinalement moulée (1) comportant des poutres latérales espacées (14, 15), des moyens de renforcement longitudinaux (41) couplés auxdites poutres latérales pour renforcer lesdites poutres latérales, des roues avant et arrière (2, 3) supportant ladite base, un support de panier (4) en matière plastique moulée s'étendant vers le haut connecté à ladite base et ayant une partie de montage de châssis dirigée vers le haut (5) adaptée pour coopérer avec ladite partie de montage du panier, ledit support de panier comportant des entretoises latérales avant et arrière dirigées vers le haut (6, 7, 8, 9) sur chacun de ses côtés, lesdites entretoises latérales arrière (8, 9) étant connectées respectivement auxdites poutres latérales pour former une partie de montage de roues pour lesdites roues arrière, lesdites roues arrière (3) étant attachées à ladite partie de montage par l'intermédiaire desdits moyens de renforcement longitudinaux de telle sorte que lesdits moyens de renforcement longitudinaux soient connectés de façon fixe à ladite partie de montage de roues et des moyens de couplage (11) pour coupler ledit panier à ladite partie de montage du châssis.

6. Châssis de chariot selon la revendication 5 dans lequel ledit support de panier comporte des éléments de stabilisation (37, 38) positionnés entre chacune desdites entretoises latérales arrière et assurant la stabilisation desdites entretoises latérales arrière dans une position sensiblement verticale et des moyens de rétention (39) pour maintenir lesdits éléments de stabilisation.

7. Châssis de chariot selon la revendication 6 dans lequel lesdits éléments de stabilisation sont réalisés en une seule pièce avec lesdites entretoises latérales arrière.

8. Châssis de chariot selon la revendication 6 ou la revendication 7 dans lequel lesdits moyens de rétention comportent une tige rigide (39).

FIG. 1

FIG. 2

EP 0 200 566 B1

FIG. 3

EP 0 200 566 B1

FIG. 4

FIG. 5

FIG. 6

FIG. 7

FIG. 8

FIG. 9

FIG. 10

## FIG. 11

## FIG. 12

## FIG. 13

## FIG. 14

## FIG. 15

## FIG. 16

## FIG. 17